# FASCICULE DE BREVET EUROPEEN

(11) **EP 1 230 427 B1**
(45) Date de publication et mention de la délivrance du brevet: **10.09.2003**
(21) Numéro de dépôt: 00966232.1
(22) Date de dépôt: 29.09.2000
(51) Int. Cl.: C23C 26/00, C23C 24/04, C09D 5/10

(54) **REVETEMENT ET PROCEDE DE TRAITEMENT ANTICORROSION DE PIECES METALLIQUES**
DECKSCHICHT SOWIE VERFAHREN ZUR ANTIKORROSIONSBEHANDLUNG VON METALLISCHEN WERKSTÜCKEN
METHOD FOR ANTICORROSIVE COATING AND TREATMENT OF METAL PARTS

(30) Priorité: 30.09.1999 FR 9912228
(43) Date de publication de la demande: 14.08.2002
(73) Titulaire: Dacral, 60100 Creil (FR)
(72) Inventeur: ROUQUIER, Daniel, F-60140 Liancourt (FR); MILLET, Benoît, F-95470 Saint-Witz (FR)
(74) Mandataire: Ahner, Francis
(86) Numéro de dépôt international: FR0002701
(87) Numéro de publication internationale: WO01023639

(56) Documents cités:
- EP-A- 0 177 786
- EP-A- 0 808 883
- WO-A-95/21277
- US-A- 4 407 899
- US-A- 4 655 832
- PATENT ABSTRACTS OF JAPAN vol. 013, no. 061 (C-567), 10 février 1989 (1989-02-10) & JP 63 250472 A (SUMITOMO METAL IND LTD;OTHERS: 01), 18 octobre 1988 (1988-10-18)
- PATENT ABSTRACTS OF JAPAN vol. 015, no. 437 (M-1176), 7 novembre 1991 (1991-11-07) & JP 03 184770 A (NISSAN MOTOR CO LTD), 12 août 1991 (1991-08-12)
- PATENT ABSTRACTS OF JAPAN vol. 006, no. 250 (C-139), 9 décembre 1982 (1982-12-09) & JP 57 145985 A (MITSUI KINZOKU KOGYO KK), 9 septembre 1982 (1982-09-09) & DATABASE WPI Week 198242 Derwent Publications Ltd., London, GB; AN 1982-88919e "Forming a corrosion-proof film" & JP 57 145985 A (MITSUI MINING & SMELTING CO), 9 septembre 1982 (1982-09-09)

## Description

La présente invention vise à mettre au point un revêtement anticorrosion de pièces métalliques, exempt de chrome et de dérivés à base de chrome et en particulier de chrome hexavalent, qui puisse être de préférence appliqué en couches minces tout en étant doté de performances de protection élevées.

L'invention s'applique aux pièces de nature métallique (en particulier acier, fonte) qui nécessitent une bonne tenue à la corrosion en couche mince. La géométrie des pièces a peu d'importance tant que l'applicabilité des pièces par les procédés décrits reste possible.

L'invention permet d'améliorer les propriétés anticorrosion des pièces traitées sans utiliser de chrome et notamment de chrome hexavalent dans la formulation des revêtements.

De nombreuses solutions de traitement anticorrosion à base de chrome auront été proposées à ce jour. Si elles donnent généralement satisfaction sur le plan de la protection des pièces métalliques, elles sont cependant de plus en plus critiquées en raison de leurs conséquences sur le plan toxique et en particulier en raison des conséquences néfastes sur l'environnement.

La présente invention concerne un revêtement anticorrosion de pièces métalliques, caractérisé en ce qu'il est constitué par l'association synergique d'une première couche à base de zinc métallique et d'une ou plusieurs couche(s) de revêtement obtenue(s) à l'aide d'une composition aqueuse contenant un métal particulaire, un solvant approprié, un épaississant et un liant constitué par un silane.

La première couche à base de zinc métallique est réalisée par un dépôt mécanique. Une telle couche constituée de zinc ou plus généralement d'un alliage de zinc et de fer, voire d'un mélange de particules de zinc et de fer, peut être appliquée dans le cadre de la présente invention à raison d'une quantité comprise entre 50 et 300 mg/dm² de métal d'apport. Pour certaines applications particulières, on pourra même se satisfaire de quantités déposées plus faibles.

Le dépôt mécanique de la couche à base de zinc métallique est avantageusement obtenu par une opération de grenaillage à l'aide de billes d'acier présentant au moins une couche extérieure comprenant soit du zinc pur soit un alliage à base de zinc.

Un tel dépôt mécanique d'une couche à base de zinc métallique peut également être assuré par une opération de grenaillage à l'aide d'un mélange de billes d'acier et de billes constituées par un coeur d'acier et présentant en surface au moins une couche extérieure à base d'un alliage de zinc ou une couche extérieure de zinc pur.

Enfin, ce dépôt mécanique de la couche à base de zinc métallique peut également être obtenu par grenaillage à l'aide de billes réalisées essentiellement à base d'un alliage de fer, le grenaillage étant réalisé en présence d'une poudre de zinc ou de semoule de zinc qui se trouve donc appliquée sous l'effet mécanique du grenaillage.

Le terme de bille ou microbille utilisé dans le cadre de la présente invention pour décrire les opérations de grenaillage doit s'entendre au sens large, c'est-à-dire englober tous types de formes de particules ou microparticules à projeter à la surface des pièces.

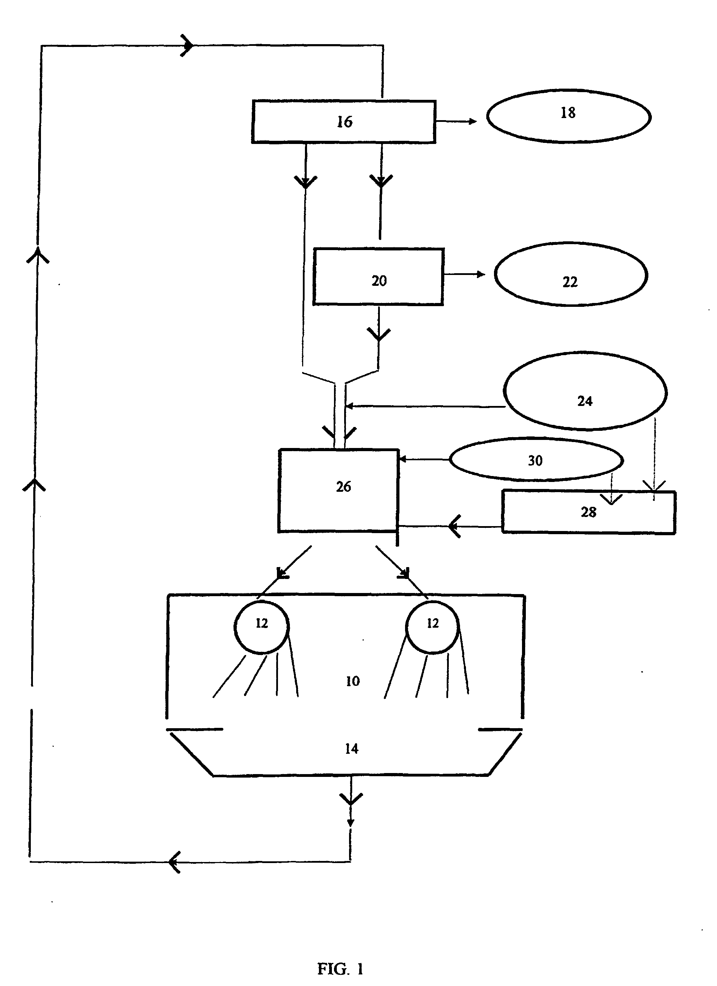

La machine de grenaillage utilisée pour réaliser cette première couche à base de zinc, peut par exemple être réalisée conformément au diagramme schématique illustré sur la figure 1 annexée.

On observe sur cette figure, que la machine comporte principalement une chambre de grenaillage 10 pouvant par exemple comporter deux turbines de projection 12 entre lesquelles vont défiler les pièces à traiter. Les turbines de projection 12 vont donc projeter les microbilles d'alliage de fer ou d'alliage à base de zinc sur les surfaces des pièces à traiter, en présence le cas échéant d'une poudre ou de semoule de zinc. La partie inférieure de cette chambre de grenaillage 10 est équipée d'un dispositif 14 de recyclage des billes de grenaillage. Ces billes sont ensuite amenées vers un séparateur granulométrique 16 de manière à écarter des billes de diamètre devenu trop faible. Ainsi, on élimine en particulier les poussières métalliques 18 générées lors de l'opération de grenaillage. Dans le cas où l'on utilise uniquement des billes revêtues d'un alliage à base de zinc, après un tri granulométrique des billes, ces dernières sont amenées vers un séparateur magnétique 20 qui permet d'effectuer un tri entre les billes d'acier recouvertes d'un alliage à base de zinc et les billes d'acier épuisées en zinc, c'est-à-dire qui ont perdu une grande partie de cet alliage à base de zinc, les billes d'acier épuisées en zinc sont récupérées au poste 22. A la sortie de ce séparateur magnétique 20, il est en outre prévu un dispositif 24 de mesure de la teneur en zinc des billes de grenaillage.

En réponse à cette mesure de teneur en zinc, le réservoir 26 des microbilles qui est destiné à alimenter les turbines de projection 12 du dispositif de grenaillage 10, va être ou non réalimenté avec des billes neuves en 28, c'est-à-dire chargées ou rechargées en zinc. Le réservoir 26 est en outre avantageusement équipé d'un système de contrôle de niveau 30.

Il est donc ainsi possible de réaliser, de manière continue ou discontinue, le dépôt mécanique de la couche à base de zinc métallique à la surface des pièces à traiter.

En ce qui concerne l'application ultérieure d'une ou plusieurs couche(s) de revêtement obtenue(s) à base d'une solution aqueuse contenant un métal particulaire, un solvant, un épaississant et un liant constitué par un silane, de façon plus précise, une telle composition comprend par exemple :
- un métal particulaire choisi parmi le zinc et/ou l'aluminium,
- un solvant organique,
- un épaississant,
- un liant à base de silane portant des groupes fonctionnels époxy,
- de l'eau.

Selon une autre caractéristique de l'invention, ladite composition contient de 10 à 35% en poids de zinc et/ou de 1,5 à 35% en poids d'aluminium.

Selon une caractéristique avantageuse, ladite composition contient de 3 à 20% en poids de silane.

De façon très générale, le dérivé à base de silane utilisé comme liant, par exemple de façon avantageuse le gamma-glycidoxypropyltriméthoxysilane est présent dans la composition à raison d'une quantité comprise entre environ 5 et environ 12% en poids par rapport au poids total de la composition.

Selon une autre particularité de l'invention, ladite composition contient de 1 à 30% en poids d'un solvant organique, en particulier de dipropylèneglycol.

De manière plus générale, le solvant organique utilisé dans ladite composition aqueuse est un solvant liquide à haut point d'ébullition, par exemple un liquide oxohydroxylé, avantageusement choisi dans le groupe consistant en tri- et tétraétylèneglycol, di- et tri-propylèneglycol, monométhyle, diméthyle et éthyl éthers des glycols précités, des polypropylène glycols, de l'alcool diacétonique, des éthers de diéthylèneglycol et leurs mélanges.

Ladite composition contient également de préférence de 0,005 à 2% en poids d'un agent épaississant, en particulier d'hydroxypropylméthylcellulose.

De façon avantageuse, le métal particulaire est utilisé sous forme de poudre ayant un diamètre compris entre 1 et 10 µm de préférence 2-5 µm ou de particules de faibles dimensions inférieures à 15 microns, ou encore un mélange des deux.

De façon générale, le métal particulaire pourra être constitué par un ou deux des métaux choisis parmi le zinc et l'aluminium, leurs alliages et leurs mélanges intermétalliques en toutes proportions.

Ladite composition aqueuse contient également un agent épaississant présent de préférence à raison de 0,05 à environ 2% en poids par rapport au poids total de la composition. Ledit épaississant sera de préférence choisi dans le groupe comprenant des épaississants cellulosiques, la gomme de xantane, des argiles modifiés et leurs mélanges.

Selon un mode de réalisation avantageux de ladite composition aqueuse, cette dernière contiendra d'environ 0,2 à environ 1,2% en poids de l'agent épaississant, de préférence choisi dans le groupe comprenant l'hydroxyéthylcellulose, la méthylcellulose, la méthylhydroxypropylcellulose, l'éthyhydroxyéthycellulose, la méthyléthylcellulose, ainsi que leurs mélanges.

Ladite composition aqueuse contient également de façon avantageuse un agent mouillant de préférence présent à raison de 0,01 à environ 3% en poids par rapport au poids total de la composition, ledit agent mouillant étant de préférence un agent de type non ionique.

La composition aqueuse peut également dans certaines conditions contenir d'environ 0,1 à environ 10% en poids d'un composé à base de bore, par exemple choisi parmi l'acide orthoborique, l'acide métaborique, l'acide tétraborique, l'oxyde de bore ainsi que leurs mélanges.

Enfin, la dite composition peut contenir également d'environ 0,1 à environ 2% en poids d'un inhibiteur de corrosion choisi dans le groupe comprenant le nitrate de calcium, le phosphate d'ammonium dibasique, le sulfonate de calcium, le carbonate de lithium, ainsi que leurs mélanges.

On précisera enfin que, de façon générale, ladite composition contient d'environ 30 à environ 60% en poids d'eau par rapport au poids total de la composition.

Cette composition peut être appliquée sur la première couche à base de zinc métallique par les opérations de pulvérisation, par trempage ou par trempage centrifugation, puis soumise à une opération de cuisson, de préférence à une température de 70 à 300°C.

Avantageusement, la réalisation de la ou lesdites couche(s) de revêtement est effectuée de manière à obtenir de l'ordre de 10 à 20 g/m² exprimé en poids de matière sèche.

Pour démontrer le caractère synergique de l'association de la première couche à base de zinc métallique avec la ou les couche(s) supérieure(s) de revêtement obtenue(s) à l'aide de la composition aqueuse à base de silane, on précisera ci-après les conditions dans lesquelles les différentes couches ont été appliquées dans le cadre de l'expérimentation comparative dont les résultats seront rapportés ci-après.

En l'espèce, le dépôt mécanique de la couche à base de zinc métallique par grenaillage, a été opéré par projection mécanique à sec sur tôle d'acier DC04 à l'aide d'une grenailleuse dénommée Z-coater DZ-100 commercialisée par la société japonaise SAMPOH, dont le fonctionnement correspond à celui du schéma de la figure annexée. Les conditions de projections sont les suivantes :
- débit de projection : 80 kg par minute,
- vitesse de la turbine : 4 200 tours par minute.

Les particules utilisées sont des particules d'alliage zinc-fer :
ZZ48 : 70%, taille des particules 0,25 à 0,7 mm
ZZ60 : 30%, taille des particules 0,04 à 0,25 mm.

Les particules sont constituées d'un noyau en fer recouvert d'un film de zinc avec à l'interface une couche d'alliage zinc-fer.

Les teneurs en zinc pour les particules ZZ48 et ZZ60 sont respectivement de 33-39 % et de 67-73 %.

La composition aqueuse à base de silane utilisée dans le cadre de l'expérimentation comparative, correspond à :
- zinc : 28%,
- aluminium : 3,1%,
- dipropylèneglycol : 4,2%,
- glycidoxypropyltriméthoxysilane : 7%,
- nonylphénolpolyoxyéthylène : 3%, et
- hydroxypropylméthylcellulose : 0,13%.

L'application de cette composition aqueuse à base de silane a été réalisée par pistollage pneumatique à jet rond (0,8 mm). Le temps de pulvérisation a été de 4 secondes pour obtenir un poids de couche de l'ordre de 16-18 g/m² avec un produit à 40% d'extrait sec et 38 secondes de viscosité (coupe AFNOR #4).

La cuisson des pièces est réalisée par convection : séchage à 70°C pendant 20 minutes suivi d'une cuisson à 300°C pendant 30 minutes.

Les résultats de ces expérimentations comparatives sont rassemblés dans les trois tableaux ci-après :

**TABLEAU 1**

| Grenaillage à l'aide de billes à base de zinc + Traitement au silane : | | |
|---|---|---|
| Grammage total | Système | BS^{*} en heures |
| 10g/m² | Grenaillage de zinc | 15 |
| | Traitement au silane | 48 |
| 20g/m² | Grenaillage de zinc | 30 |
| | Traitement au silane | 96 |
| | Grenaillage 10g/m² + traitement au silane 10g/m² | 216 |
| 30g/m² | Grenaillage de zinc | 72 |
| | Traitement au silane | 192 |
| | Grenaillage 10g/m²+ traitement au silane 20g/m² | 432 |

| | | |
|---|---|---|
| ^{*}BS : Brouillard salin selon test ASTM B117 | | |

**TABLEAU 2 (COMPARATIF)**

| Système électrozingué + traitement au silane : | | |
|---|---|---|
| Grammage total | Système | BS^{*}en heures |
| 10g/m² | Traitement au silane | 48 |
| 20g/m² | Traitement au silane | 96 |
| 70g/m² | Electrozingué | 96 |
| 80g/m² | Electrozingué | 120 |
| | Electrozingué 70g/m²+traitement au silane 10g/m² | 360 |
| 90g/m² | Electrozingué | 144 |
| | Electrozingué 70g/m²+traitement au silane 20g/m² | >1000h |

| | | |
|---|---|---|
| ^{*}BS : Brouillard salin selon test ASTM B 117 | | |

**TABLEAU 3 (COMPARATIF)**

| Système galvanisé + traitement au silane : | | |
|---|---|---|
| Grammage total | Système | BS^{*}en heures |
| 10g/m² | Traitement au silane | 48 |
| 20g/m² | Traitement au silane | 96 |
| 90g/m² | Galvanisé | 168 |
| 100g/m² | Galvanisé | 192 |
| | Galvanisé 90g/m²+traitement au silane 10g/m² | 384 |
| 110g/m² | Galvanisé | 216 |
| | Galvanisé 90g/m²+traitement au silane 20g/m² | >1000h |

| | | |
|---|---|---|
| ^{*}BS : Brouillard salin selon test ASTM B117 | | |

Quel que soit le mode de dépôt de la première couche à base de zinc métallique utilisé, associé au dépôt du revêtement à l'aide de la composition aqueuse à base de silane, l'effet de synergie se trouve démontré de façon incontestable dans les trois tableaux, et ceci bien entendu pour les différentes variantes de grammage total expérimentées.

La tenue au brouillard salin est très nettement améliorée pour des systèmes à base d'électrozingué et galvanisé et dans une moindre mesure de grenaillage, lorsque le traitement au silane atteint un grammage de 20 g/m². Ceci peut s'expliquer par le fait qu'un grammage de 10 g/m² n'est probablement pas suffisant pour recouvrir parfaitement la pièce compte tenu des hétérogénéités de surface.

Pour obtenir de l'ordre de 400 heures de brouillard salin, il est possible d'utiliser le système grenaillage + traitement au silane à 30 g/m² de grammage total (soit 6-7 µm); pour le système électrozingué + traitement au silane à 80 g/m² de grammage total (soit 11-13 µm); ou pour le système galvanisé + traitement au silane à 100g/m² de grammage total (soit 14-16 µm).

Ceci montre la forte synergie existant entre le grenaillage de zinc et le traitement au silane et permet de diviser par deux l'épaisseur déposée pour une tenue à la corrosion similaire.

## Revendications

1. Revêtement anticorrosion de pièces métalliques, **caractérisé en ce qu'**il est constitué par l'association synergique d'une première couche à base de zinc métallique réalisée par dépôt mécanique, et d'une ou plusieurs couche(s) de revêtement obtenue(s) à l'aide d'une composition aqueuse contenant un métal particulaire, un solvant approprié, un épaississant et un liant constitué par un silane.

2. Revêtement anticorrosion selon la revendication 1, **caractérisé en ce que** le dépôt mécanique de la couche à base de zinc métallique est assuré par grenaillage de billes présentant au moins une couche extérieure comprenant un alliage à base de zinc.

3. Revêtement anticorrosion selon la revendication 1, **caractérisé en ce que** le dépôt mécanique de la couche à base de zinc métallique est assuré par un grenaillage à l'aide d'un mélange de billes constituées par un alliage à base de fer et de billes présentant au moins une couche extérieure comprenant un alliage à base de zinc.

4. Revêtement anticorrosion selon la revendication 1, **caractérisé en ce que** le dépôt mécanique de la couche à base de zinc métallique est assuré par un grenaillage de billes à base d'un alliage de fer en présence de poudre de zinc.

5. Revêtement anticorrosion selon l'une des revendications 1 à 4, **caractérisé en ce que** le dépôt mécanique de la couche à base de zinc métallique est constitué par des particules de zinc, un mélange de particules de zinc et de particules de fer, ou encore des particules d'alliages zinc-fer, à raison de 50 à 300 mg/dm².

6. Revêtement anticorrosion selon l'une des revendications 1 à 5, **caractérisé en ce que** la ou les couches de revêtement sont obtenues à l'aide d'une composition comprenant :
- un métal particulaire comprenant le zinc et/ou l'aluminium,
- un solvant organique,
- un épaississant,
- un liant à base de silane portant des groupes fonctionnels époxy,
- de l'eau.

7. Revêtement anticorrosion selon la revendication 6, **caractérisé en ce que** la composition contient de 10 à 35% en poids de zinc.

8. Revêtement anticorrosion selon l'une des revendications 6 et 7, **caractérisé en ce que** la composition contient de 1,5 à 35% en poids d'aluminium.

9. Revêtement anticorrosion selon l'une des revendications 6 à 8, **caractérisé en ce que** la composition contient de 3 à 20% en poids de silane.

10. Revêtement anticorrosion selon l'une des revendications 6 à 9, **caractérisé en ce que** la composition contient de 1 à 30% de solvant organique, en particulier de dipropylèneglycol.

11. Revêtement anticorrosion selon l'une des revendications 6 à 10, **caractérisé en ce que** la composition contient de 0,005 à 2% en poids d'agent épaississant, en particulier d'hydroxypropylméthylcellulose.

12. Revêtement anticorrosion selon l'une des revendications précédentes, **caractérisé en ce que** la ou lesdites couches de revêtement sont appliquées par pulvérisation, trempage ou trempage-centrifugation, puis soumises à une opération de cuisson, de préférence à une température de 70 à 300°C.

13. Revêtement anticorrosion selon la revendication 12, **caractérisé en ce que** la réalisation de la ou lesdites couches de revêtement est effectuée de manière à obtenir de l'ordre de 10 à 20g/m² exprimé en poids de matière sèche.

14. Procédé de traitement anticorrosion de pièces métalliques, **caractérisé en ce que** l'on applique à la surface desdites pièces un revêtement anticorrosion selon es revendications précédentes.

15. Pièces métalliques comportant à leur surface un revêtement inticorrosion selon l'une des revendications 1 à 13.

## Patentansprüche

1. Antikorrosionsüberzug von metallischen Werkstücken, **dadurch gekennzeichnet, dass** er durch die synergistische Assoziation einer ersten Schicht auf der Basis von metallischem Zink, die durch mechanische Abscheidung verwirklicht wird, und einer oder mehrerer Überzugsschicht(en) aufgebaut ist, die mit Hilfe einer wässrigen Zusammensetzung erhalten wird bzw. werden, welche ein teilchenförmiges Metall, ein geeignetes Lösungsmittel, ein Verdickungsmittel und ein Bindemittel enthält, das aus einem Silan zusammengesetzt ist.

2. Antikorrosionsüberzug nach Anspruch 1, **dadurch gekennzeichnet, dass** die mechanische Abscheidung der Schicht auf der Basis von metallischem Zink durch Strahlblasen von Kügelchen vorgenommen wird, welche mindestens eine äußere Schicht aufweisen, die eine Legierung auf der Basis von Zink umfasst.

3. Antikorrosionsüberzug nach Anspruch 1, **dadurch gekennzeichnet, dass** die mechanische Abscheidung der Schicht auf der Basis von metallischem Zink durch Strahlblasen mit Hilfe einer Mischung von Kügelchen, die aus einer Legierung auf Eisen-Basis zusammengesetzt sind, und von Kügelchen, die mindestens eine äußere Schicht aufweisen, die eine Legierung auf Zink-Basis umfassen, vorgenommen wird.

4. Antikorrosionsüberzug nach Anspruch 1, **dadurch gekennzeichnet, dass** die mechanische Abscheidung der Schicht auf der Basis von metallischem Zink durch Strahlblasen von Kügelchen auf der Basis einer Eisenlegierung in Anwesenheit von Zinkpulver vorgenommen wird.

5. Antikorrosionsüberzug nach einem der Ansprüche 1 bis 4, **dadurch gekennzeichnet, dass** die mechanische Abscheidung der Schicht auf der Basis von metallischem Zink aus Zink-Teilchen, einer Mischung von Zink-Teilchen und Eisen-Teilchen oder auch aus Teilchen von Zink/Eisen-Legierungen in einer Menge von 50 bis 300 mg/dm² zusammengesetzt ist.

6. Antikorrosionsüberzug nach einem der Ansprüche 1 bis 5, **dadurch gekennzeichnet, dass** die Überzugsschicht(en) mit Hilfe einer Zusammensetzung erhalten werden, welche umfasst:
- ein teilchenförmiges Metall, das Zink und/oder Aluminium umfasst,
- ein organisches Lösungsmittel,
- ein Verdickungsmittel,
- ein Bindemittel auf der Basis von Silan, das funktionelle Epoxygruppen trägt,
- Wasser.

7. Antikorrosionsüberzug nach Anspruch 6, **dadurch gekennzeichnet, dass** die Zusammensetzung 10 bis 35 Gew.-% Zink enthält.

8. Antikorroslonsüberzug nach einem der Ansprüche 6 und 7, **dadurch gekennzeichnet, dass** die Zusammensetzung 1,5 bis 35 Gew.-% Aluminium enthält.

9. Antikorrosionsüberzug nach einem der Ansprüche 6 bis 8, **dadurch gekennzeichnet, dass** die Zusammensetzung 3 bis 20 Gew.-% Silan enthält.

10. Antikorrosionsüberzug nach einem der Ansprüche 6 bis 9, **dadurch gekennzeichnet, dass** die Zusammensetzung 1 bis 30 Gew.-% organisches Lösungsmittel, insbesondere Dipropylenglycol, enthält.

11. Antikorrosionsüberzug nach einem der Ansprüche 6 bis 10, **dadurch gekennzeichnet, dass** die Zusammensetzung 0,005 bis 2 Gew.-% Verdickungsmittel, insbesondere Hydroxypropylmethylcellulose, enthält.

12. Antikorrosionsüberzug nach einem der vorangehenden Ansprüche, **dadurch gekennzeichnet, dass** die Überzugsschicht(en) durch Zerstäubung, Beschichtung durch Eintauchen oder Eintauchen/Zentrifugieren aufgebracht werden, dann einem Einbrennvorgang unterzogen werden, vorzugsweise bei einer Temperatur von 70 bis 300 °C.

13. Antikorrosionsüberzug nach Anspruch 12, **dadurch gekennzeichnet, dass** die Aufbringung der Überzugsschicht(en) auf solche Weise bewirkt wird, dass man in der Größenordnung von 10 bis 20 g/m², ausgedrückt als Gewicht Trockenmaterial, erhält.

14. Verfahren zur Antikorrosionsbehandlung von metallischen Werkstücken, **dadurch gekennzeichnet, dass** man auf die Oberfläche der metallischen Werkstücke einen Antikorrosionsüberzug nach den vorangehenden Ansprüchen aufbringt.

15. Metallische Werkstücke, umfassend auf ihrer Oberfläche einen Antikorrosionsüberzug nach einem der Ansprüche 1 bis 13.

## Claims

1. Anticorrosion coating for metal workpieces, **characterized in that** it consists of the synergistic combination of a first layer based on metallic zinc, produced by mechanical deposition, and one or more coating layer(s) obtained using an aqueous composition containing a particulate metal, a suitable solvent, a thickener and a binder consisting of a silane.

2. Anticorrosion coating according to Claim 1, **characterized in that** the mechanical deposition of the layer based on metallic zinc is carried out by shotblasting with the aid of shot having at least one outer layer comprising a zinc-based alloy.

3. Anticorrosion coating according to Claim 1, **characterized in that** the mechanical deposition of the layer based on metallic zinc is carried out by shotblasting with the aid of a mixture of shot consisting of an iron-based alloy and shot having at least one outer layer comprising a zinc-based alloy.

4. Anticorrosion coating according to Claim 1, **characterized in that** the mechanical deposition of the layer based on metallic zinc is carried out by shotblasting with the aid of shot based on an iron alloy in the presence of zinc powder.

5. Anticorrosion coating according to one of Claims 1 to 4, **characterized in that** the mechanical deposition of the layer based on metallic zinc consists of particles of zinc, a mixture of particles of zinc and of particles of iron, or particles of zinc-iron alloys, at 50 to 300 mg/dm².

6. Anticorrosion coating according to one of Claims 1 to 5, **characterized in that** the coating layer(s) is(are) obtained using a composition comprising:
- a particulate metal chosen from zinc and/or aluminium,
- an organic solvent,
- a thickener,
- a silane-based binder carrying epoxy functional groups,
- water.

7. Anticorrosion coating according to Claim 6, **characterized in that** the composition contains from 10 to 35% by weight of zinc.

8. Anticorrosion coating according to either of Claims 6 and 7, **characterized in that** the composition contains from 1.5 to 35% by weight of aluminium.

9. Anticorrosion coating according to one of Claims 6 to 8, **characterized in that** the composition contains from 3 to 20% by weight of silane.

10. Anticorrosion coating according to one of Claims 6 to 9, **characterized in that** the composition contains from 1 to 30% of organic solvent, in particular of dipropylene glycol.

11. Anticorrosion coating according to one of Claims 6 to 10, **characterized in that** the composition contains from 0.005 to 2% by weight of thickener, in particular of hydroxypropylmethylcellulose.

12. Anticorrosion coating according to one of the preceding claims, **characterized in that** the said coating layer(s) is(are) applied by spraying, dipping or dip-spinning, and then subjected to a baking operation, preferably at a temperature of 70 to 300°C.

13. Anticorrosion coating according to Claim 12, **characterized in that** the said coating layer(s) is(are) produced so as to obtain about 10 to 20 g/m² expressed by weight of dry material.

14. Anticorrosion treatment process for metal workpieces, **characterized in that** an anticorrosion coating according to the preceding claims is applied to the surface of the said workpieces.

15. Metal workpiece comprising, at its surface, an anticorrosion coating according to one of Claims 1 to 13.
